# EUROPEAN PATENT SPECIFICATION

(11) **EP 1 667 368 B1**
(45) Date of publication and mention of the grant of the patent: **22.09.2010**
(21) Application number: 04292897.8
(22) Date of filing: 06.12.2004
(51) Int. Cl.: H04L 12/28, H04L 12/56

(54) **Scheduler for a base station of a communications network and method of operating a scheduler**
Ablaufsteuerung für eine Basisstation in einem Kommunikationsnetz und Verfahren zu deren Betrieb
Planificateur pour une station de base dans un réseau de communication et procédé de planification

(43) Date of publication of application: 07.06.2006
(73) Proprietor: Alcatel Lucent, 75008 Paris (FR)
(72) Inventor: Klotsche, Ralf, 75305 Neuenbürg (DE); Schmidberger, Elmar, 70439 Stuttgart (DE)
(74) Representative: Wetzel, Emmanuelle

(56) References cited:
- DE-A- 10 214 115
- US-A1- 2004 008 632

## Description

The present invention relates to a scheduler for a network element, in particular for a base station of a communications network, wherein resources required for transmitting data within said communications network are scheduled and/or granted by said scheduler depending on a request for said resources.

The present invention further relates to a method of operating a scheduler of a network element, in particular of a scheduler of a base station of a communications network, wherein resources required for transmitting data within said communications network are scheduled and/or granted by said scheduler depending on a request for said resources.

Scheduling techniques are described in DE 10214115.

Such schedulers are known from prior art and they are e.g. used within base stations that can inter alia be employed to form a so-called multi-hop network architecture which offers the possibility to exchange data between neighbouring radio cells each of which is associated to a base station of the communications network. Since said exchange can be performed by means of a radio frequency (RF) interface provided within said base stations, a backbone connecting the base stations e.g. with optical fiber means or the like is not required.

The major disadvantage of such a wireless multi-hop network architecture based on contemporary systems consists in comparatively large delays which usually amount to a multiple of respective transmit frame units, depending on the system and communications protocol used.

Said delay may i.e. reach tens of milliseconds and thus has a service-degrading influence especially on services such as voice over IP (VoIP) and the like.

Therefore, it is an object of the present invention to provide an improved scheduler and an improved method of operating a scheduler of the aforementioned type to achieve reduced delays during data transmission in particular when using multi-hop configurations e.g. of base stations.

The scope of the invention is defined by the appended independent claims.

Concerning the scheduler, said object is achieved by providing within said scheduler a look ahead generator for generating look ahead requests depending on requests and/or on look ahead requests previously received by said scheduler.

Such an inventive look ahead request may e.g. be generated by said look ahead generator in reaction to a request for resources sent from a subscriber station to the base station comprising the inventive scheduler. This is especially advantageous, if the base station addressed with said request is the first base station within a chain of base stations to be used for a multi-hop data transmission, because by means of the inventive look ahead request, the next base station of the multi-hop chain may already be notified of a future data transmission for which resources are to be allocated or reserved, respectively.

Resources in the above sense may e.g. be free transmission time frames / time slots, bandwidth, transmission channels and the like.

The inventive look ahead request enables said next base station to timely schedule resources for the future data transmission which avoids transmission delays inherent to contemporary base stations and schedulers which usually only perform the scheduling locally and independent of neighbouring base stations.

The inventive scheduler is not limited to being used within a base station of a communications network. It is also possible to employ the inventive scheduler within other network elements that are based on a shared medium with a granting mechanism depending on respective requests, wherein transmitted data is to be relayed over a plurality of network elements. For instance, cable TV systems providing for a return channel are a further field of application for the inventive scheduler.

According to an advantageous embodiment of the present invention, said scheduler is characterized by comprising a look ahead processor capable of receiving and/or processing requests and/or look ahead requests.

Said look ahead processor is configured to handle requests incoming from e.g. subscriber stations comprised within the base station's radio cell. Such requests are known from prior art and may for example be so-called MAC-requests, i.e. requests relating to services of the data link layer or the media access control (MAC) layer defined within the ISO/OSI reference model.

Additionally, the look ahead processor of the inventive scheduler is capable of processing look ahead requests, which may e.g. be received from a neighbouring base station having an inventive look ahead generator. The look ahead processor enables the inventive scheduler to timely prepare for a future request for resources, which will most probably follow the look ahead request. A possible reaction to receiving a look ahead request may e.g. comprise reserving or allocating resources that are needed to satisfy said future request within the respective base station.

A further advantageous embodiment of the present invention is characterized by said scheduler comprising a buffer, e.g. a ring buffer, in particular for storing requests and/or look ahead requests and/or state information related to said requests and/or look ahead requests, wherein said state information preferably comprises at least one of the following states: reserved, affirmed, valid, invalid.

According to the present invention, the state "reserved" is used to denote resources which have been scheduled in reaction to a received look ahead request. I.e. there is a high probability that a request associated to said look ahead request will follow.

The state "affirmed" is firstly used to denote resources which have been scheduled in reaction to a received request, i.e. an ordinary request in as use within contemporary systems in contrast to said inventive look ahead request.

Secondly, the state "affirmed" is also used to denote resources that have previously been scheduled in reaction to a received look ahead request. At that stage, said resources are first of all set to "reserved", as described above. When subsequently receiving a request corresponding to the look ahead request, said resources are also set to "affirmed", and thus there is no difference to resources that have been scheduled according to prior art by only using a prior art request, i.e. without a look ahead request beforehand.

The states "valid" and "invalid" are e.g. used to specify whether allocated or scheduled resources have actually been used for a data transmission. If so, the resources are set to "valid". Otherwise, i.e. if no data transmission has been performed within a specific resource, e.g. a time slot reserved for said data transmission, the resource was wasted and is marked as "invalid".

The states "valid" and "invalid" are primarily used to evaluate the performance of the scheduler and to collect statistics which enable to optimise operating parameters of the scheduler, which may e.g. be accomplished by establishing a closed loop control.

Another advantageous embodiment of the inventive scheduler comprises a grant arrival monitor for monitoring whether previously requested and/or granted resources have actually been used for a data transmission. The information obtained by said grant arrival monitor may e.g. be used to set resource states to valid or invalid, respectively, as described above.

A further advantageous embodiment of the present invention is characterized by comprising an SLA and/or policing module which evaluates service level agreements (SLA) and security and/or transmission policies and the like.

Within a multi-hop data transmission, said SLA evaluation or said policing is advantageously only performed within the first base station of the multi-hop chain.

A further solution to the object of the present invention regarding a method of operating a scheduler of a base station of a communications network, wherein resources required for transmitting data within said communications network are scheduled and/or granted by said scheduler depending on a request for said resources, is characterized by providing at least one further base station with a look ahead request depending on a request and/or on a look ahead request previously received by said scheduler.

Thus it is possible for a first base station to trigger a neighbouring base station, which e.g. constitutes the next hop of a multi-hop data transmission. Notifying a next base station is possible in reaction to receiving a request which may e.g. originate directly from a subscriber station or in reaction to a look ahead request that has been forwarded by another base station upstream the multi-hop chain.

Advantageously, said scheduler allocates a resource with the state "affirmed" upon receiving a request, and said scheduler allocates a resource with the state "reserved" upon receiving a look ahead request. This e.g. enables to distinguish between a request coming directly from a subscriber station or having been generated by a look ahead generator of an upstream base station.

According to a further embodiment of the present invention, said scheduler changes the state of said resource from "reserved" to "affirmed" upon receiving a request corresponding to a previously received look ahead request.

According to a further embodiment of the present invention, said scheduler changes a state of a previously allocated resource to "invalid" if a previously requested and/or granted resource has actually not been used for a data transmission, and/or to "valid" if a previously requested and/or granted resource has actually been used for a data transmission.

For monitoring whether a previously requested and/or granted resource has actually been used the above mentioned inventive grant arrival monitor may be used.

According to a further embodiment of the present invention, requests and/or look ahead requests and/or state information related to said requests and/or look ahead requests is stored in a buffer, preferably in a ring buffer.

According to a further embodiment of the present invention, stored requests and/or look ahead requests and/or stored state information related to said requests and/or look ahead requests is evaluated, in particular for collecting statistics of said scheduler.

Another very advantageous embodiment of the present invention proposes employing a closed loop control regarding the scheduling and/or allocation of resources with respect to the arrival of requests and/or look ahead requests and/or the time of arrival of transmitted data which enables an efficient optimisation of the data transmission.

Another very advantageous embodiment of the present invention is characterized in that resources are scheduled and/or state information related to said requests and/or look ahead requests is altered depending on a measured delay between an arrival of a look ahead request and a subsequent request corresponding to said look ahead request. Thus an optimisation process local to a specific base station is enabled independent of other base stations.

A further advantageous variant of the present invention proposes to perform said closed loop control in order to
- minimize a queue depth of a buffer of said scheduler, and/or to
- minimize delays and/or jitter, in particular when forwarding a request to a next base station.

A further advantageous embodiment of the present invention provides a scheduler being capable of performing the inventive method according to one of the claims 7 to 17.

Generally, the method according to the present invention is independent of the specific mechanism that is used for the procedure of requesting resources required for data transmissions and for granting these resources.

For instance, the method according to the present invention can be performed together with the following granting mechanisms known from prior art:
UGS (Unsolicited Granting Service), in which a regular pattern of grants is delivered to a subscriber station without an individual request of the subscriber station. The UGS is usually employed for fixed bit rate data transmission and/or for connection oriented services like voice services.
RTP (Real Time Polling), wherein a subscriber station is polled frequently and periodically with opportunities to request for grants in a collision free manner. RTP is also well suited for voice services such as voice over IP (VoIP).
NRTP (non-RTP), which resembles RTP but which has a reduced polling rate and a less regular polling pattern. NRTP granting mechanisms optionally provide a support of a minimum bandwidth.

Contention based granting, in which all subscribers compete for access.

The inventive method provides a systematic approach for minimising the delay of multi-hop data transmission and jitter by evaluating feedback information e.g. on an on-demand basis.

Another obvious advantage arising from the application of the inventive method is the minimisation of data and/or packet storage space that has to be provided in the inventive base stations since forwarding delays are significantly reduced by using the inventive look ahead requests.

The inventive method can also be operated so as to focus the possible optimisations to one of the aforedescribed issues of delay minimisation, jitter minimisation and minimisation of data and/or packet storage space.

A further advantage of the present invention is the independence of the inventive method of any underlying standards, e.g. concerning the transmission of data between a subscriber station and a base station and the like.

Though losing some of the benefits of the present invention, a base station comprising the inventive scheduler maintains full interoperability with prior art base stations. Furthermore, the inventive method is transparent to subscriber stations and does therefore not require any changes of subscriber station hardware or software.

Although the present invention is not limited to a special network communications system or standard, it is well suited for being implemented within networks operating according to IEEE 802.16 family specifications.

Further advantages and features of the present invention are described in the following detailed description with reference to the drawings in which
- Fig. 1: shows a typical scenario employing a first embodiment of the present invention,
- Fig. 2: shows an embodiment of an inventive scheduler,
- Fig. 3a: shows a first message flow according to one embodiment of the present invention,
- Fig. 3b: shows a second message flow according to one embodiment of the present invention, and
- Fig. 4: shows a state diagram as implemented within one embodiment of the inventive scheduler.

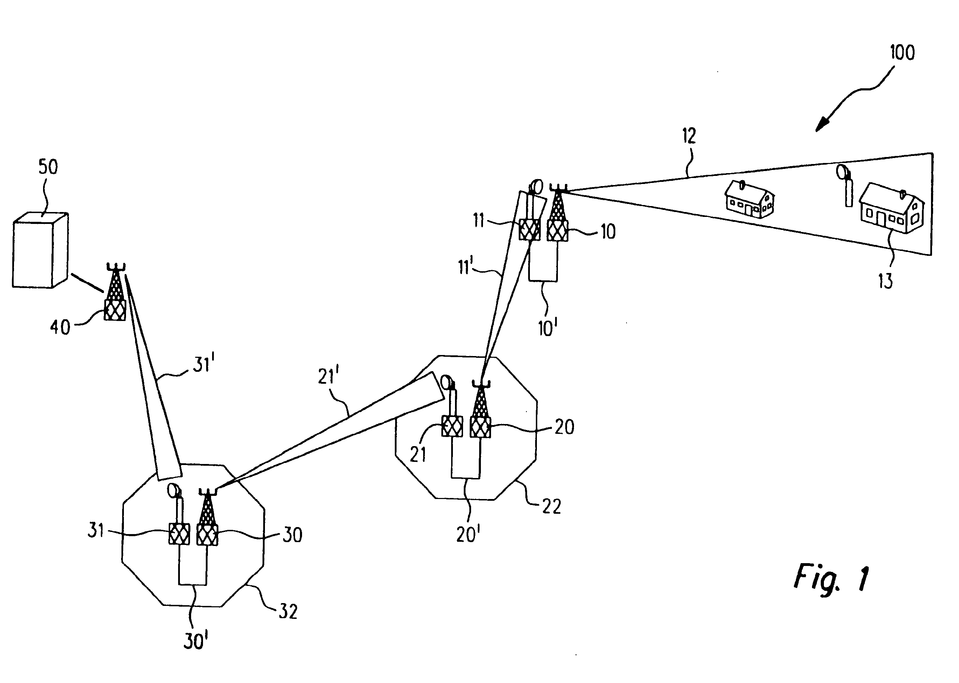

The communications network 100 depicted in Fig. 1 comprises a plurality of base stations 10, 20, 30, 40 each of which defines a radio cell 12, 22, 32 in which wireless data transmission is possible between subscriber stations 13 of the respective radio cell 12 and the corresponding base station 10.

The base stations 10, 20, 30 and 40 are not connected by a backbone e.g. in form of a cable connection or the like which necessitates employing a wireless data transmission in order to exchange data between different base stations 10, 20, 30, 40.

The wireless data transmission of e.g. the first base station 10 to the further base station 20 is realised by means of an RF connection symbolized by the triangle 11'. Said RF connection 11' is maintained from a subscriber station 11 which is assigned to the first base station 10 and connected by the link 10'.

The advantage of using the subscriber station 11 for the mentioned data transmission of the first base station 10 to the further base station 20 is based on the compatibility of this solution with existing network communications standards which do not provide for a direct communication of two base stations 10, 20 in an uplink fashion. However, a typical uplink connection scenario as performed by the subscriber station 11 and the further base station 20 does not cause any problem.

In the same way, wireless data transmissions are performed from the base station 20 to the base station 30 and from the base station 30 to the base station 40. For this purpose, each of the further base stations 20, 30 is assigned a special subscriber station 21, 31 linked to the respective base stations 20, 30 by the links 20', 30' as depicted in Fig. 1.

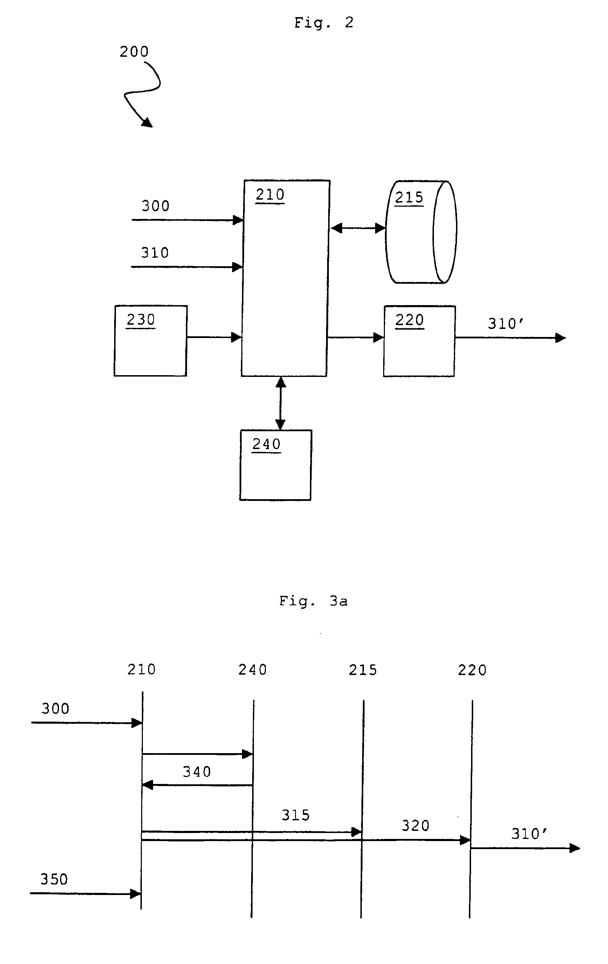

The following section describes a multi-hop data transmission from the subscriber station 13 to the destination network element 50, cf. Fig. 1, wherein an operation of the inventive scheduler 200, which is depicted in Fig. 2 and which is comprised within each of said base stations 10, 20, 30, 40, is given in detail.

The inventive scheduler 200 according to Fig. 2 comprises a look ahead processor 210 that is connected to a ring buffer 215, a look ahead generator 220, a grant arrival monitor 230, and to a SLA and/or policing module 240.

The look ahead processor is configured to receive requests 300, 310 for resources which are required for a data transmission in said communications network 100 of Fig. 1. Said resources may e.g. comprise free transmission time frames / time slots, bandwidth, transmission channels and the like.

The requests 300 may in one embodiment of the present invention e.g. be realised by MAC-requests, i.e. by messages exchanged between network elements within the media access control (MAC) layer as defined within the ISO/OSI reference model.

Upon receiving a MAC-request 300 as depicted in Fig. 3a, the scheduler 200 (Fig. 2) of the base station 10 (Fig. 1) triggers a policy control dialog 340, wherein the SLA and policing module 240 of the inventive scheduler 200 is contacted and which is provided to check and process service level agreements, traffic shaping, and in particular policing, since said request 300 may originate from a non-policed source.

Such a policy control dialog 340 is usually only necessary within the first-hop base station 10 of a multi-hop chain of base stations, i.e. within intermediate base stations 20, 30, 40 the policy control dialog 340 need not be performed, because it has already been dealt with within said first base station 10.

After said policy control dialog 340, an available resource is allocated by means of the message 315 of Fig. 3a sent to the ring buffer 215 by said look ahead processor 210. The resource, e.g. a free transmission time frame or the like, may e.g. be represented by an entry within said ring buffer 215 and may comprise various states such as affirmed, reserved, valid and invalid.

Since said MAC-request 300 originated directly from said subscriber station 13, the state of the resource allocated therefore is set to affirmed, which is similar to the processing of resources in prior art schedulers.

The affirmed resource will later on be granted to the subscriber station 13 by means of a corresponding grant message (not shown) issued by the base station 10. A response 350 to said grant message may be issued by the subscriber station 13 and may contain data to be transmitted to the destination network element 50.

In parallel to allocating said resource with the state "affirmed" within said ring buffer 215, the look ahead processor 210 issues a message 320 to the look ahead generator 220. Said message 320 notifies the look ahead generator 220 of the fact, that a multi-hop data transmission is to be performed in response to the MAC-request 300 of the subscriber station, and consequently, the look ahead generator 220 issues a look ahead request 310' to the next hop base station 20 (Fig. 1).

The look ahead request 310' comprises timing information based on the scheduling performed within said scheduler 200 of the first hop base station 10 and enables the next hop base station 20 to timely allocate resources for the future data transmission, whereby delays as occurring within prior art systems may be avoided.

The timing information may e.g. comprise the time delay between issuing the look ahead request 310' to the next base station 20 and the point of time at which the above mentioned grant message is issued to the subscriber station 13.

Generally, timing information which is e.g. provided to a next hop base station 20 by means of a look ahead request 310' as well as any other timing information used within the inventive scheduler 200, in particular for an exchange with other network elements, may be defined as an absolute value or as a differential value.

When using absolute values for representing timing information, a proper synchronization of system clocks of different network elements using said timing information is crucial. The synchronization may advantageously be achieved by periodically exchanging control messages in analogy to the look ahead requests 310, for example.

Using differential values for describing timing information requires predictable delays for the process of data exchange between network elements.

After issuing the look ahead request 310' to the next hop base station 20, within the first hop base station 10 the data transmission 350, which has been previously granted to the subscriber station 13, is received which is recognized by the grant arrival monitor 230 (Fig. 2), which monitors whether granted resources are actually used for a data transmission or whether the resources are not used and thus are wasted. Said monitoring enables a feedback control within the scheduler 200 of a base station 10 and an optimization of timing parameters.

The information obtained by said grant arrival monitor 230 is also used to set the previously allocated resource to either a valid state or to an invalid state, depending on whether the resource was wasted or not. This enables collecting statistics of the scheduler operation and further evaluations.

Upon receiving said data transmission 350 within the base station 10, the data so received can be passed to the next hop base station 20 via the subscriber station 11 that is co-located to the first hop base station 10 and connected to it via the link 10'.

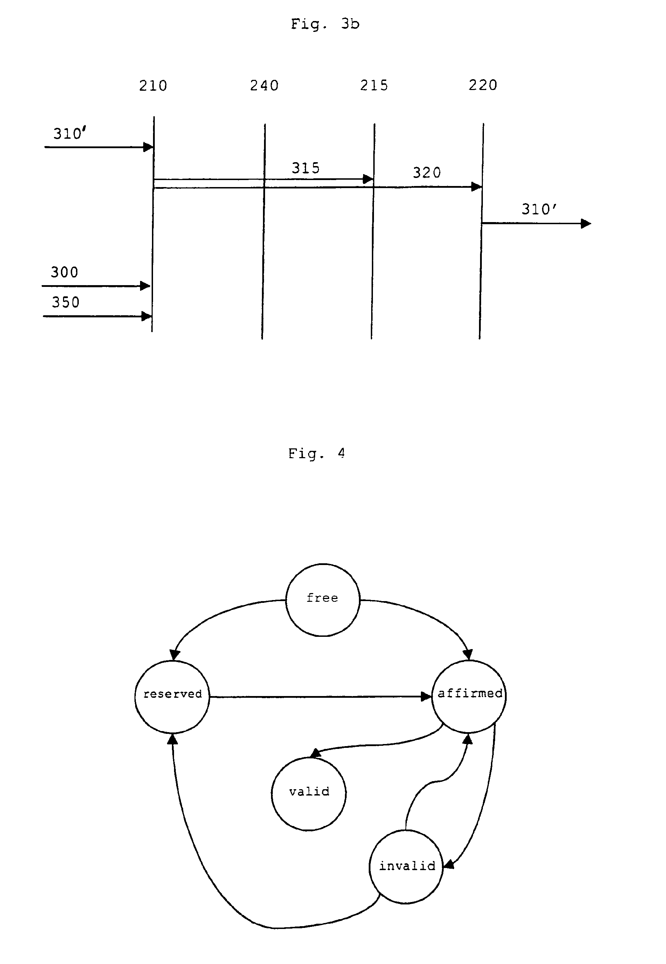

Prior to receiving said data, the next hop base station 20 first receives the look ahead request 310' which has been issued by the look ahead generator 220 of the first base station's scheduler 200. This is depicted in Fig. 3b.

Upon receiving the look ahead request 310', the scheduler 200 of the next hop base station 20 triggers the allocation of a resource by means of the message 315 sent to the ring buffer 215. In contrast to the situation according to Fig. 3a, in the present case a look ahead request 310' has been received, which is to notify the next hop base station 20 of the fact that resources may be required in future, i.e. for the multi-hop data transmission.

Consequently, within said ring buffer 215 respective resources are allocated by setting their state to "reserved". Only upon receiving a MAC-request 310 (Fig. 3a) which confirms the look ahead request 310', the state of said resource is changed from "reserved" to "affirmed".

As already described in conjunction with Fig. 3a, in the next hop base station 20 there is also triggered a further look ahead request 310', which is effected by the message 320 issued from said look ahead processor 210 to the look ahead generator 220 of the base station 20. Said further look ahead request 310' issued by the look ahead generator 220 of the base station 20 may e.g. be forwarded to the next base station 30 of the multi-hop chain of base stations 10,20,30,40.

After receiving said look ahead request 310' from the first hop base station 10 and after issuing the further look ahead request 310' to the base station 30, a MAC-request 300 is received within the base station 20. Said MAC-request 300 confirms the previously received look ahead request 310', and therefore a state of the previously reserved resource is changed from "reserved" to "affirmed".

A corresponding granting process related to this affirmed resource will take place in the base station 20 in analogy to the granting process as described with reference to base station 10 and Fig. 3a.

Figure 4 details the various states of resources used by the inventive scheduler 200 (Fig. 2).

Initially, a free resource is set to the state "reserved" upon receiving a look ahead request 310, cf. Fig. 3a. After that, upon receiving a MAC-request 300 corresponding to said look ahead request 310, the resource state is changed from "reserved" to "affirmed".

A free resource may also directly be assigned the state "affirmed", which is the case upon directly receiving a MAC-request 300, e.g. from a subscriber station 13, cf.

Fig. 1. The states "reserved" and "affirmed" are thus used within the inventive scheduler 200 to distinguish between MAC-requests 300 as known from prior art systems and the inventive look ahead requests 310 which indicate a future MAC-request 300 and which enable a base station 10, 20, 30, 40 provided with said look ahead request 310 to timely schedule resources for said future MAC-request 300 and a subsequent corresponding data transmission.

For each affirmed resource a grant is issued by the scheduler 200, and the resource is after that assigned the state "valid" or "invalid", depending on whether a data transmission has actually been performed in response to the grant.

If there has been no data transmission in response to a grant, the corresponding resource is firstly set to "invalid". The invalid resource may also be re-scheduled and its state may thus be set to "reserved" or "affirmed", depending on whether a respective MAC-request 300 has been received in the meantime.

The inventive scheduler may use feedback information to locally optimize a scheduling process within a specific base station 10,20,30,40. For instance, timing information related to the issuing of a grant may be evaluated and may be used by e.g. the look ahead processor 210 to adapt a timing that is used for generating further look ahead requests 310'.

Said feedback information may e.g. further be constituted by a time difference between an arrival of a look ahead request 310 and an arrival of the corresponding MAC-request 300, e.g. within the base station 20. Said time difference - inter alia - depends on the scheduling of the neighbouring upstream base station 10 and may vary. By analyzing said time difference, the local scheduler 200 of base station 200 is enabled to adapt the timing used for issuing further look ahead requests 310' to the next base station 30.

Generally, by using the inventive look ahead generator 220, it is possible to notify neighbouring base stations 10, 20, 30, 40 of the scheduling and granting processes within a specific base station 10, 20, 30, 40.

Furthermore, it is possible to also consider a time delay which is due to the transmission of data from a base station 20 via its co-located subscriber station 21 within the scheduler of the neighbouring base station 30, wherein said time delay is preferably assumed to be constant.

The inventive scheduler and the inventive method of operating is not limited to being used within a base station of a communications network. It is also possible to employ the inventive scheduler within other network elements that are based on a shared medium with a granting mechanism depending on respective requests, wherein transmitted data is to be relayed over a plurality of network elements. For instance, cable TV systems providing for a return channel are a further field of application for the inventive scheduler.

## Claims

1. Scheduler (200) for a network element, in particular for a base station (10, 20, 30, 40) of a communications network (100), wherein resources required for transmitting data within said communications network (100) are scheduled and/or granted by said scheduler (200) depending on a request (300, 310) for said resources, **characterized in that** said scheduler (200) comprises a look ahead generator (220) for generating look ahead requests (310, 310') for notifying at least one further network element, in particular a next base station (20, 30, 40) of a multi-hop chain of base stations, of a future data transmission between said network element and said further network element depending on requests (300) and/or on look ahead requests (310) previously received by said scheduler (200).

2. Scheduler (200) according to claim 1, **characterized by** comprising a look ahead processor (210) for receiving and/or processing requests (300) and/or look ahead requests (310, 310').

3. Scheduler (200) according to one of the preceding claims, **characterized by** comprising a buffer (215), e.g. a ring buffer (215), in particular for storing requests (300) and/or look ahead requests (310, 310') and/or state information related to said requests (300) and/or look ahead requests (310, 310'), wherein said state information preferably comprises at least one of the following states: reserved, affirmed, valid, invalid.

4. Scheduler (200) according to one of the preceding claims, **characterized by** comprising a grant arrival monitor (230) for monitoring whether previously requested and/or granted resources have actually been used for a data transmission.

5. Scheduler (200) according to one of the preceding claims, **characterized by** comprising a service level agreement and/or policing module (240).

6. Scheduler (200) according to one of the preceding claims, **characterized by** being capable of performing the method according to one of the claims 7 to 16.

7. Method of operating a scheduler (200) of a network element, in particular a scheduler (200) of a base station (10, 20, 30, 40) of a communications network (100), wherein resources required for transmitting data within said communications network (100) are scheduled and/or granted by said scheduler (200) depending on a request (300, 310) for said resources, **characterized by** providing at least one further network element, in particular a next base station (20, 30, 40) of a multi-hop chain of base stations, with a look ahead request (310) for notifying said further network element of a future data transmission between said network element and said further network element depending on a request (300) and/or on a look ahead request (310) previously received by said scheduler (200).

8. Method according to claim 7, **characterized in that** said scheduler (200) allocates a resource with the state "affirmed" upon receiving a request (300).

9. Method according to one of the claims 7 to 8, **characterized in that** said scheduler (200) allocates a resource with the state "reserved" upon receiving a look ahead request (310).

10. Method according to claim 9, **characterized in that** said scheduler (200) changes the state of said resource from "reserved" to "affirmed" upon receiving a request (300) corresponding to a previously received look ahead request (310).

11. Method according to one of the claims 7 to 10, **characterized in that** said scheduler (200) changes a state of a previously allocated resource to
- "invalid" if a previously requested and/or granted resource has actually not been used for a data transmission, and/or to
- "valied" if a previously requested and/or granted resource has actually been used for a data transmission.

12. Method according to one of the claims 7 to 11, **characterized by** storing requests (300) and/or look ahead requests (310, 310') and/or state information related to said requests (300) and/or look ahead requests (310, 310') in a buffer (215), preferably in a ring buffer(215).

13. Method according to claim 12, **characterized by** evaluating stored requests (300) and/or look ahead requests (310, 310') and/or stored state information related to said requests (300) and/or look ahead requests (310, 310'), in particular for collecting statistics of said scheduler (200).

14. Method according to one of the claims 7 to 13, **characterized by** employing a closed loop control regarding the scheduling and/or allocation of resources with respect to the arrival of requests (300) and/or look ahead requests (310) and/or the time of arrival of transmitted data.

15. Method according to one of the claims 7 to 14, **characterized in that** resources are scheduled and/or state information related to said requests (300) and/or look ahead requests (310, 310') is altered depending on a measured delay between an arrival of a look ahead request (310) and a subsequent request (3.00) corresponding to said look ahead request (310).

16. Method according to one of the claims 7 to 15, **characterized by** evaluating a service level agreement (SLA) and/or by performing policing regarding a received request (300) and/or look ahead request 310).

## Patentansprüche

1. Ablaufsteuerung (200) für ein Netzwerkelement, insbesondere für eine Basisstation (10, 20, 30, 40) eines Kommunikationsnetzwerks (100), wobei die für die Übertragung von Daten innerhalb des besagten Kommunikationsnetzwerks (100) erforderliche Ressourcen von der besagten Ablaufsteuerung (200) in Abhängigkeit von einer Anforderung (300, 310) für die besagten Ressourcen geplant und/oder gewährt werden, **dadurch gekennzeichnet, dass** die besagte Ablaufsteuerung (200) einen Vorhersagegenerator (220) zum Erzeugen von Vorhersageanforderungen (310, 310') umfasst, um mindestens ein weiteres Netzwerkelement, insbesondere eine nächste Basisstation (20, 30, 40) einer Multi-Hop-Kette von Basisstationen, über eine bevorstehende Datenübertragung zwischen dem besagten Netzwerkelement und dem besagten weiteren Netzwerkelement in Abhängigkeit von an der Ablaufsteuerung (200) empfangenen Anforderungen (300) und/oder zuvor empfangenen Vorhersageanforderungen (310) zu benachrichtigen.

2. Ablaufsteuerung (200) nach Anspruch 1, **dadurch gekennzeichnet, dass** sie einen Vorhersageprozessor (210) für den Empfang und/oder die Verarbeitung von Anforderungen (300) und/oder Vorhersageanforderungen (310, 310') umfasst.

3. Ablaufsteuerung (200) nach einem der vorstehenden Ansprüche, **dadurch gekennzeichnet, dass** sie einen Puffer (215), z. B. einen Ringpuffer (215), insbesondere zum Speichern von Anforderungen (300) und/oder Vorhersageanforderungen (310, 310') und/oder Zustandsinformationen in Bezug auf die besagten Anforderungen (300) und/oder Vorhersageanforderungen (310, 310') umfasst, wobei die besagten Zustandsinformationen vorzugsweise mindestens einen der folgenden Zustände umfassen: reserviert, bestätigt, gültig, ungültig.

4. Ablaufsteuerung (200) nach einem der vorstehenden Ansprüche, **dadurch gekennzeichnet, dass** sie einen Gewährungsankunfts-Monitor (230) umfasst, um zu überwachen, ob zuvor angeforderte und/oder gewährte Ressourcen tatsächlich für eine Datenübertragung benutzt worden sind.

5. Ablaufsteuerung (200) nach einem der vorstehenden Ansprüche, **dadurch gekennzeichnet, dass** sie ein Dienstgütevereinbarungs- und/oder Kontrollmodul (240) umfasst.

6. Ablaufsteuerung (200) nach einem der vorstehenden Ansprüche, **dadurch gekennzeichnet, dass** die fähig ist, das Verfahren gemäß einem der Ansprüche 7 bis 16 auszuführen.

7. Verfahren für den Betrieb einer Ablaufsteuerung (200) eines Netzwerkelements, insbesondere einer Ablaufsteuerung (200) einer Basisstation (10, 20, 30, 40) eines Kommunikationsnetzwerks (100), wobei für die Übertragung von Daten innerhalb des besagten Kommunikationsnetzwerks (100) erforderliche Ressourcen von der besagten Ablaufsteuerung (200) in Abhängigkeit von einer Anforderung (300, 310) für die besagten Ressourcen geplant und/oder gewährt werden, **dadurch gekennzeichnet, dass** mindestens einem weiteren Netzwerkelement, insbesondere einer nächsten Basisstation (20, 30, 40) einer Multi-Hop-Kette von Basisstationen, eine Vorhersageanforderung (310) gesendet wird, um das besagte weitere Netzwerkelement über eine bevorstehende Datenübertragung zwischen dem besagten Netzwerkelement und dem besagten weiteren Netzwerkelement in Abhängigkeit von einer an der besagten Ablaufsteuerung (200) empfangenen Anforderung (300) und/oder einer zuvor empfangenen Vorhersageanforderung (310) zu benachrichtigen.

8. Verfahren nach Anspruch 7, **dadurch gekennzeichnet, dass** die besagte Ablaufsteuerung (200) eine Ressource nach Empfang einer Anforderung (300) mit dem Zustand "bestätigt" zuteilt.

9. Verfahren nach einem der Ansprüche 7 bis 8, **dadurch gekennzeichnet, dass** die besagte Ablaufsteuerung (200) eine Ressource nach Empfang einer Vorhersageanforderung (310) mit dem Zustand "reserviert" zuteilt.

10. Verfahren nach Anspruch 9, **dadurch gekennzeichnet, dass** die besagte Ablaufsteuerung (200) den Zustand der besagten Ressource nach Empfang einer Anforderung (300), welche einer zuvor empfangenen Vorhersageanforderung (310) entspricht, von "reserviert" in "bestätigt" ändert.

11. Verfahren nach einem der Ansprüche 7 bis 10, **dadurch gekennzeichnet, dass** die besagte Ablaufsteuerung (200) den Zustand einer zuvor zugeteilten Ressource in
- "ungültig" ändert, wenn eine zuvor angeforderte und/oder gewährte Ressource nicht tatsächlich für einen Datenübertragen benutzt worden ist, und/oder in
- "gültig" wenn eine zuvor angeforderte und/oder gewährte Ressource tatsächlich für eine Datenübertragung benutzt worden ist.

12. Verfahren nach einem der Ansprüche 7 bis 11, **dadurch gekennzeichnet, dass** Anforderungen (300) und/oder Vorhersageanforderungen (310, 310') und/oder Zustandsinformationen in Bezug auf die besagten Anforderungen (300) und/oder Vorhersageanforderungen (310,310') in einem Puffer (215), vorzugsweise in einem Ringpuffer (215), gespeichert werden.

13. Verfahren nach Anspruch 12, **dadurch gekennzeichnet, dass** die gespeicherten Anforderungen (300) und/oder Vorhersageanforderungen (310, 310') und/oder gespeicherten Zustandsinformationen in Bezug auf die besagten Anforderungen (300) und/oder Vorhersageanforderungen (310, 310'), ausgewertet werden, insbesondere zum Erfassen von Statistiken der besagten Ablaufsteuerung (200).

14. Verfahren nach einem der Ansprüche 7 bis 13, **dadurch gekennzeichnet, dass** ein geschlossener Regelungskreis in Bezug auf die Planung und/oder Zuteilung von Ressourcen entsprechend der Ankunft von Anforderungen (300) und/oder Vorhersageanforderungen (310) und/oder der Ankunftszeit von übertragenen Daten verwendet wird.

15. Verfahren nach einem der Ansprüche 7 bis 14, **dadurch gekennzeichnet, dass** Ressourcen geplant und/oder Zustandsinformationen in Bezug auf die besagten Anforderungen (300) und/oder Vorhersageanforderungen (310, 310') in Abhängigkeit von einer gemessenen Verzögerung zwischen einer Ankunft einer Vorhersageanforderung (310) und einer anschließenden Anforderung (300), welcher der besagten Vorhersageanforderung (310) entspricht, geändert werden.

16. Verfahren nach einem der Ansprüche 7 bis 15, **dadurch gekennzeichnet, dass** eine Dienstgütevereinbarung (SLA) ausgewertet wird und/oder eine Kontrolle in Bezug auf eine empfangene Anforderung (300) und/oder eine Vorhersageanforderung (310) durchgeführt wird.

## Revendications

1. Dispositif de planification (200) pour un élément de réseau, en particulier pour une station de base (10, 20, 30, 40) d'un réseau de communications (100), dans lequel les ressources requises pour transmettre des données dans ledit réseau de communications (100) sont planifiées et/ou accordées par ledit dispositif de planification (200) en fonction d'une requête (300, 310) desdites ressources, **caractérisé en ce que** ledit dispositif de planification (200) comprend un générateur de registre d'anticipation (220) pour générer des requêtes anticipées (310, 310') pour notifier au moins un autre élément de réseau, en particulier une station de base suivante (20, 30, 40) d'une chaîne à sauts multiples de stations de base, d'une future transmission de données entre ledit élément de réseau et ledit autre élément de réseau en fonction des requêtes (300) et/ou des requêtes anticipées (310) reçues préalablement par ledit dispositif de planification (200).

2. Dispositif de planification (200) selon la revendication 1, **caractérisé en ce qu'**il comprend un processeur de registre d'anticipation (210) pour recevoir et/ou traiter les requêtes (300) et/ou les requêtes anticipées (310, 310').

3. Dispositif de planification (200) selon l'une des revendications précédentes, **caractérisé en ce qu'**il comprend une mémoire tampon (215), par exemple une mémoire tampon en anneau (215), en particulier pour stocker les requêtes (300) et/ou les requêtes anticipées (310, 310') et/ou des informations d'état relatives auxdites requêtes (300) et/ou auxdites requêtes anticipées (310, 310'), dans lequel lesdites informations d'état comprennent de préférence au moins l'un des états suivants : réservé, affirmé, valide, invalide.

4. Dispositif de planification (200) selon l'une des revendications précédentes, **caractérisé en ce qu'**il comprend un dispositif de surveillance d'arrivée d'autorisation (230) pour surveiller si les ressources précédemment demandées et/ou accordées ont réellement été utilisées pour une transmission de données.

5. Dispositif de planification (200) selon l'une des revendications précédentes, **caractérisé en ce qu'**il comprend un module d'accord sur les niveaux de service et/ou de réglementation (240).

6. Dispositif de planification (200) selon l'une des revendications précédentes, **caractérisé en ce qu'**il est en mesure d'exécuter le procédé selon l'une des revendications 7 à 16.

7. Procédé de fonctionnement d'un dispositif de planification (200) d'un élément de réseau, en particulier un dispositif de planification (200) d'une station de base (10, 20, 30, 40) d'un réseau de communications (100), dans lequel les ressources requises pour transmettre les données dans ledit réseau de communications (100) sont planifiées et/ou accordées par ledit dispositif de planification (200) en fonction d'une requête (300, 310) desdites ressources, **caractérisé en ce qu'**il transmet à au moins un autre élément de réseau, en particulier une station de base suivante (20, 30, 40) d'une chaîne à sauts multiples de stations de base, une requête anticipée (310) pour notifier audit autre élément de réseau une future transmission de données entre ledit élément de réseau et ledit autre élément de réseau en fonction d'une requête (300) et/ou d'une requête anticipée (310) préalablement reçue par ledit dispositif de planification (200).

8. Procédé selon la revendication 7, **caractérisé en ce que** ledit dispositif de planification (200) attribue une ressource dans l'état « affirmé » suite à la réception d'une requête (300).

9. Procédé selon l'une des revendications 7 à 8, **caractérisé en ce que** ledit dispositif de planification (200) attribue une ressource dans l'état « réservé » suite à la réception d'une requête anticipée (310).

10. Procédé selon la revendication 9, **caractérisé en ce que** ledit dispositif de planification (200) modifie l'état de ladite ressource de « réservé » à « affirmé » suite à la réception d'une requête (300) correspondant à une requête anticipée (310) reçue précédemment.

11. Procédé selon l'une des revendications 7 à 10, **caractérisé en ce que** ledit dispositif de planification (200) modifie un état d'une ressource attribuée précédemment en
- « invalide » si une ressource précédemment demandée et/ou accordée n'a en réalité pas été utilisée pour une transmission de données, et/ou en
- « valide » si une ressource précédemment demandée et/ou accordée a réellement été utilisée pour une transmission de données.

12. Procédé selon l'une des revendications 7 à 11, **caractérisé par** le stockage de requêtes (300) et/ou de requêtes anticipées (310, 310') et/ou d'informations d'état relatives auxdites requêtes (300) et/ou auxdites requêtes anticipées (310, 310') dans une mémoire tampon (215), de préférence une mémoire tampon en anneau (215).

13. Procédé selon la revendication 12, **caractérisé par** l'évaluation des requêtes (300) et/ou des requêtes anticipées (310, 310') et/ou des informations d'état relatives auxdites requêtes (300) et/ou auxdites requêtes anticipées (310, 310') stockées, en particulier pour collecter des statistiques pour ledit dispositif de planification (200).

14. Procédé selon l'une des revendications 7 à 13, **caractérisé par** l'emploi d'une commande en boucle fermée pour la planification et/ou l'attribution de ressources en relation avec l'arrivée des requêtes (300) et/ou des requêtes anticipées (310) et/ou le moment d'arrivée des données transmises.

15. Procédé selon l'une des revendications 7 à 14, **caractérisé en ce que** les ressources sont planifiées et/ou les informations d'état relatives auxdites requêtes (300) et/ou auxdites requêtes anticipées (310, 310') sont modifiées en fonction d'un retard mesuré entre l'arrivée d'une requête anticipée (310) et une requête suivante (300) correspondant à ladite requête anticipée (310).

16. Procédé selon l'une des revendications 7 à 15, **caractérisé par** l'évaluation d'un accord sur les niveaux de service (SLA) et/ou l'exécution de règles en relation avec une requête (300) et/ou une requête anticipée (310) reçue.
